# EUROPEAN PATENT SPECIFICATION

(11) **EP 4 354 970 B1**
(45) Date of publication and mention of the grant of the patent: **18.11.2026**
(21) Application number: 23768772.8
(22) Date of filing: 22.08.2023
(51) Int. Cl.: H04W 48/16, H04W 12/45, H04W 36/14, H04W 36/32, H04W 36/36, H04W 48/18, H04W 84/04, H04W 84/10, H04W 88/06, H04W 4/40

(54) **ELECTRONIC DEVICE FOR VEHICLE AND OPERATION METHOD THEREOF**
ELEKTRONISCHE FAHRZEUGVORRICHTUNG UND BETRIEBSVERFAHREN DER ELEKTRONISCHEN FAHRZEUGVORRICHTUNG
DISPOSITIF ÉLECTRONIQUE POUR UN VÉHICULE ET SON PROCÉDÉ DE FONCTIONNEMENT

(30) Priority: 02.09.2022 KR 20220111677
(43) Date of publication of application: 17.04.2024
(73) Proprietor: Samsung Electronics Co., Ltd., Suwon-si, Gyeonggi-do 16677 (KR)
(72) Inventor: JUN, Jaebum, Suwon-si, Gyeonggi-do 16677 (KR); LEE, Kijeong, Suwon-si, Gyeonggi-do 16677 (KR); JANG, Changwon, Suwon-si, Gyeonggi-do 16677 (KR); JU, Seungbum, Suwon-si, Gyeonggi-do 16677 (KR)
(74) Representative: HGF
(86) International application number: PCT/KR2023/012427
(87) International publication number: WO 2024/049084

(56) References cited:
- WO-A1-2021/244932
- JP-A- 2016 025 505
- JP-A- 2018 207 401
- JP-A- 2020 150 296
- KR-A- 20210 027 820
- US-A1- 2013 157 711
- US-A1- 2017 055 201
- US-A1- 2020 008 138

## Description

### TECHNICAL FIELD

The disclosure relates to a vehicular electronic device for performing a network search.

### BACKGROUND ART

Vehicular electronic devices are devices which are mounted in vehicles to provide and manage a connected service remotely. When a vehicle is being parked or driven, data obtained from the vehicular electronic device can be transmitted to a server and used for data management and analysis. In addition, data for vehicle updates can be received by the vehicular electronic device from the server and used for vehicle maintenance and management.

The present invention has been devised in the above context.

US 2020008138A1 relates to selection of a Citizens Broadband Radio Service (CBRS) profile for communicating with an associated CBRS network
US 20130157711A1 relates to a communication network, which can select and provide the most suitable communication network in consideration of communication situations of an area in which a vehicle is located.

### DESCRIPTION OF EMBODIMENTS

### TECHNICAL SOLUTION TO PROBLEM

The present invention is defined by the independent claims. Further aspects of the present invention are outlined in the dependent claims. According to an embodiment of the disclosure, an operation method of a vehicular electronic device may be provided. The operation method may include identifying an occurrence of a preset event. The operation method may further include identifying a network state of the vehicular electronic device, based on identification of the occurrence of the preset event. The operation method may further include searching for a second network, based on the network state indicating connection to a first network. The operation method may further include, based on the found second network being available, accessing the second network. The operation method may further include transmitting/receiving data related to a vehicle to/from the server by using the second network. The first network may be a public network, and the second network may be a private network. That is, according to an embodiment of the disclosure, an operation method of a vehicular electronic device for a vehicle may be provided. The operation method may comprise identifying an occurrence of a preset event. The method may further comprise identifying a network state of the vehicular electronic device, in response to identifying the occurrence of the preset event. The method may further include searching for a second network in response to the identified network state indicating a connection of the vehicular electronic device to a first network. The method may further comprise accessing the second network in response to detecting the second network and transmitting/receiving data related to the vehicle to/from a server using the second network. The first network may be a public network, and the second network may be a private network.

According to an embodiment of the disclosure, a vehicular electronic device may be provided. The vehicular electronic device may include at least one processor, a communication interface, and a memory storing one or more instructions. The one or more processors may be configured to execute the one or more instructions stored in the memory to identify an occurrence of a preset event. The one or more processors may be configured to execute the one or more instructions stored in the memory to identify a network state of the vehicular electronic device, based on the occurrence of the preset event being identified. The one or more processors may be configured to execute the one or more instructions stored in the memory to search for a second network, based on the network state indicating connection to a first network. The one or more processors may be configured to execute the one or more instructions stored in the memory to access the second network, based on the found second network being available. The one or more processors may be configured to execute the one or more instructions stored in the memory to transmit/receive data related to the vehicle to/from the server by using the second network. The first network may be a public network, and the second network may be a private network. That is, according to an embodiment of the disclosure, a vehicular electronic device for a vehicle may be provided. The vehicular electronic device may comprise a communication interface, a memory storing one or more instructions, and at least one processor configured to execute the one or more instructions stored in the memory. The at least one processor may be further configured to identify an occurrence of a preset event. The at least one processor may be further configured to identify a network state of the vehicular electronic device in response to identifying the occurrence of the preset event. The at least one processor may be additionally configured to search for a second network in response to the identified network state indicating a connection of the vehicular electronic device to a first network. The at least one processor may be further configured to access the second network in response to detecting the second network. The at least one processor may also be configured to transmit/receive data related to the vehicle to/from the server using the second network. The first network may be a public network, and the second network may be a private network.

According to an embodiment of the disclosure, a non-transitory computer-readable recording medium having recorded thereon a computer program for executing one of methods described above and to be described below, performed by the vehicular electronic device, of searching for a network may be provided.

### TECHNICAL ADVANTAGES

Advantageously, transmitting data to and from the vehicular electronic device and the server using the second network, where the second network is a private network, enables the data to be transmitted more efficiently. That is, the transmitted data does not put a strain on the capabilities of the public network, and so contributes to reducing network load in the existing public network. Additionally, the user encounters reduced costs relating to the transmitting of data over the public network. In this way, private or corporate companies may be enabled to efficiently manage vehicles to create various mobility services.

Furthermore, by transmitting data over a private network rather than a public network, the risk of unwanted data leakage is reduced. Therefore, potentially high security or sensitive data may be transmitted between the vehicular electronic device and the server more securely.

### BRIEF DESCRIPTION OF DRAWINGS

FIG. 1 is a diagram for describing a method, performed by a vehicular electronic device, of forming a communication connection with a server by searching for a network, according to an embodiment of the disclosure.
FIG. 2 is a flowchart of an operation, performed by a vehicular electronic device according to an embodiment of the disclosure, of using a private network.
FIG. 3 is a diagram for explaining the types of vehicles on which a vehicular electronic device according to an embodiment of the disclosure is mountable.
FIG. 4A is a diagram for explaining a second network that is used by a vehicular electronic device according to an embodiment of the disclosure.
FIG. 4B is a diagram for explaining three layers of a Citizens Broadband Radio Service (CBRS) network.
FIG. 5A is a diagram for explaining an operation, performed by a vehicular electronic device according to an embodiment of the disclosure, of identifying an occurrence of a pre-set event.
FIG. 5B is a diagram for explaining another operation, performed by a vehicular electronic device according to an embodiment of the disclosure, of identifying an occurrence of a pre-set event.
FIG. 6 is a diagram for explaining log data that is collected by a vehicular electronic device according to an embodiment of the disclosure.
FIG. 7 is a diagram for explaining a subscriber identity module (SIM) included in a vehicular electronic device according to an embodiment of the disclosure.
FIG. 8 is a block diagram of a configuration of a vehicular electronic device according to an embodiment of the disclosure.
FIG. 9 is a diagram illustrating communication of a vehicular electronic device with a server, according to an embodiment of the disclosure.
FIG. 10 is a block diagram of a server according to an embodiment of the disclosure.

### MODE OF DISCLOSURE

Throughout the disclosure, the expression "at least one of a, b or c" indicates only a, only b, only c, both a and b, both a and c, both b and c, all of a, b, and c, or variations thereof.

Hereinafter, the terms used in the specification will be briefly described, and then the disclosure will be described in detail. Although general terms widely used at present were selected for describing the disclosure in consideration of the functions thereof, these general terms may vary according to intentions of one of ordinary skill in the art, case precedents, the advent of new technologies, and the like. Terms arbitrarily selected by the applicant of the disclosure may also be used in a specific case. In this case, their meanings need to be given in the detailed description. Hence, the terms must be defined based on their meanings and the contents of the entire specification, not by simply stating the terms.

An expression used in the singular may encompass the expression of the plural, unless it has a clearly different meaning in the context. Unless otherwise defined, all terms (including technical and scientific terms) used herein have the same meaning as commonly understood by one of ordinary skill in the art to which this disclosure belongs.

The terms "comprises" and/or "comprising" or "includes" and/or "including" when used in this specification, specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

Embodiments of the disclosure are described in detail herein with reference to the accompanying drawings so that this disclosure may be easily performed by one of ordinary skill in the art to which the disclosure pertains. The disclosure may, however, be embodied in many different forms and should not be construed as being limited to the embodiments set forth herein. In the drawings, parts irrelevant to the description are omitted for simplicity of explanation, and like numbers refer to like elements throughout.

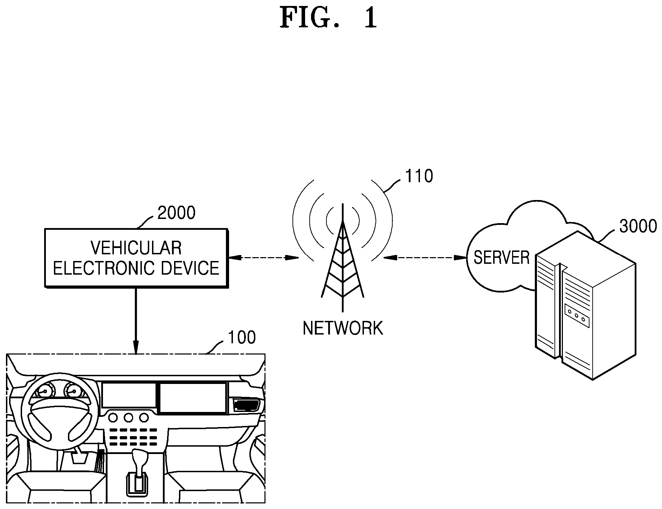

FIG. 1 is a diagram for describing a method, performed by a vehicular electronic device, of forming a communication connection with a server by searching for a network, according to an embodiment of the disclosure.

Referring to FIG. 1, the vehicular electronic device 2000 according to an embodiment of the disclosure may be an electronic device mounted within a vehicle 100.

In an embodiment of the disclosure, the vehicle 100 may refer to an internal combustion engine vehicle or an electric vehicle, and may include a movable device (e.g., a robot). In an embodiment of the disclosure, an electric car is illustrated for convenience of description. However, the vehicle 100 is not limited thereto.

In an embodiment of the disclosure, the vehicular electronic device 2000 may be mounted in the vehicle 100. The function and shape of the vehicular electronic device 2000 may vary.

For example, the vehicular electronic device 2000 according to an embodiment of the disclosure may include a display installed in a digital cockpit in which a dashboard, an infotainment system, audio, lighting control, etc. of the vehicle 100 are implemented with digital technology.

The vehicular electronic device 2000 according to an embodiment of the disclosure may be implemented as being included in an in-vehicle infotainment (IVI) system for implementing IVI technology. The IVI system refers to a system that displays or uses various pieces of information available in vehicles such that a user (driver and/or passenger) may easily and conveniently recognize the various pieces of information, such as radio, navigation, voice commands, and automatic safety diagnosis. Infotainment is a term corresponding to a combination of information and entertainment, and may be a term that collectively refers to both information and entertainment. In other words, the IVI system may refer to a system that allows information to be used happily and conveniently like entertainment.

The vehicular electronic device 2000 according to the disclosed embodiment may be an electronic device that electronically processes data for operating the vehicle 100, without including a component (e.g., a display) for visually displaying information. For example, the vehicular electronic device 2000 may be an electronic device that transmits traveling information and the like to the server 3000 and updates system software and the like to provide and manage connected services remotely.

According to an embodiment of the disclosure, the vehicular electronic device 2000 mounted on the vehicle 100 may search for the network 110 in order to perform data communication with a server 3000. The vehicular electronic device 2000 may search for and connect to the network 110, in order to remotely provide and manage a connected service when the vehicle 100 is in operation. The vehicle 100 being in operation may include the vehicle being driven, or the engine of the vehicle being turned on, or a user sitting in a seat of the vehicle. However, the disclosure is not limited thereto, and the vehicular electronic device 2000 may maintain a communication connection with the network 110 even when the engine of the vehicle 100 is turned off. The vehicular electronic device 2000 may perform communication between the vehicle 100 and the server 3000 to transmit/receive information necessary or helpful for driving or using the vehicle.

According to an embodiment of the disclosure, the vehicular electronic device 2000 may use a private network to enhance security and/or transmit/receive important data with a high security level, in data transmission/reception with the server 3000 using the network 110. That is, the vehicular electronic device 2000 may communicate with the server 3000 using a private network to improve the security of the telecommunication transmission or to share important data of a sensitive nature or with a high security level.

According to an embodiment of the disclosure, the vehicular electronic device 2000 may include two or more subscriber identity modules (SIMs). The SIM may be a SIM card inserted into a physical SIM slot or may be an embedded SIM (eSIM), but the disclosure is not limited thereto. When the vehicular electronic device 2000 includes a dual SIM, the vehicular electronic device 2000 may authenticate a user of the vehicular electronic device 2000 for a public network by using a first SIM, and may authenticate the user of the vehicular electronic device 2000 for a private network by using a second SIM.

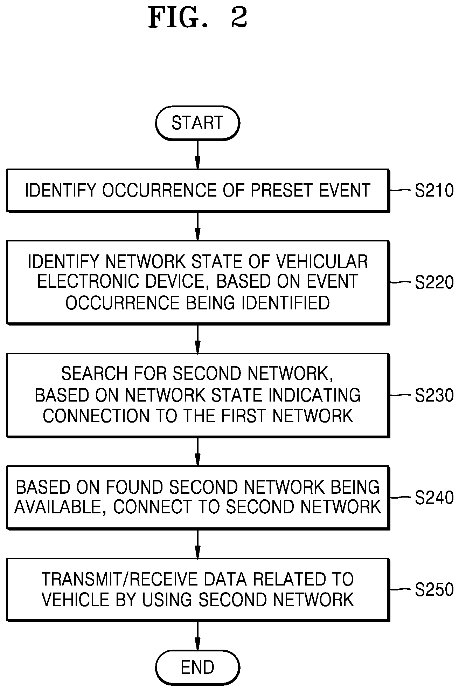

FIG. 2 is a flowchart of an operation, performed by a vehicular electronic device according to an embodiment of the disclosure, of using a private network.

In operation S210, the vehicular electronic device 2000 according to an embodiment of the disclosure identifies an occurrence of a preset event.

According to an embodiment of the disclosure, a pre-set (or pre-defined or prestored) event refers to a trigger for the vehicular electronic device 2000 to search for and connect to a private network. The preset event may be included as one or more pre-set events. The vehicular electronic device 2000 may identify that at least one of the preset events occurs, in relation to the driving and/or use of the vehicle 100. Various types of pre-set events may be identified by the vehicular electronic device 2000. For example, the various types of pre-set events may include, but are not limited to, whether the vehicle 100 is charged, whether the vehicle 100 enters a pre-registered area, whether the engine of the vehicle 100 is turned on/off (or whether a motor is turned on/off), whether a shift gear of the vehicle 100 is in park (P) or neutral (N), whether a user input for the vehicular electronic device 2000 is received. For example, the preset event to trigger the search for a private network may include an electric vehicle being in a fully charged state, or a state of being charged. The preset event may include the engine or motor of the vehicle being turned on, or being on. The preset event may include receiving a user input indicative of a user's desire to search for a private network. The preset event may include the vehicle entering a pre-registered or otherwise specified region or area. For example, the pre-registered or otherwise specified region or area may be a specific location, such as a home garage, or may be an area within a certain distance of a particular location. The preset event may include a shift gear of the vehicle being in a park or neutral state. However, these are merely examples of preset events and the invention is not limited to these examples.

According to an embodiment of the disclosure, based on the state of the vehicle 100, the vehicular electronic device 2000 may output inducing information to the driver/user of the vehicle 100 so that a pre-set event occurs, or may drive the vehicle 100 so that a pre-set event occurs. Inducing information may be information which alerts or informs the user to a state of the vehicle. Inducing information may be information which provides the user with information on how to remedy the state of the vehicle. For example, when a remaining capacity of the battery is less than or equal to a pre-set value, the vehicular electronic device 2000 may induce the driver/user to charge the battery, or may cause the vehicle 100 to return to a pre-registered area to start charging. For example, the inducing information may be provided as an audio, visual or other suitable indication to the user that a remaining capacity of the battery is below the preset level. The inducing information may inform the user that the battery requires charging, and may comprise information regarding an availability of charging points to induce or encourage the user to charge the battery.

In operation S220, the vehicular electronic device 2000 according to an embodiment of the disclosure identifies the network state of the vehicular electronic device 2000, based on identification of event occurrence. That is, in response to the preset event being identified, the vehicular electronic device 2000 identifies the network state of the vehicular electronic device 2000. Identifying the network state may comprise identifying whether the vehicular electronic device 2000 is connected to a network. Identifying the network state may comprise identifying a type of network to which the vehicular electronic device 2000 is connected. For example, identifying the type of network may comprise identifying whether the connected network is a public network or a private network. Identifying the type of network may comprise identifying a security level of the connected network.

According to an embodiment of the disclosure, the vehicular electronic device 2000 may search for a public network to receive a communication service. The vehicular electronic device 2000 may search for, for example, a public land mobile network (PLMN). In detail, the vehicular electronic device 2000 may search for and connect to a PLMN when the power of the vehicular electronic device 2000 is turned on, but conditions for searching for and connecting the PLMN are not limited thereto. The PLMN is a network operated by a communication service provider, and the vehicular electronic device 2000 may connect to 3G/4G/5G communication services provided by the communication service provider, by using the PLMN to which the vehicular electronic device 2000 has subscribed. In other words, the default setting of a communication network basically used by the vehicular electronic device 2000 may be a public network. That is, the vehicular electronic device 2000 may connect to and use a public communication network by default.

According to an embodiment of the disclosure, the vehicular electronic device 2000 may search for a private network to transmit/receive specific data (e.g., safe transmission of security data) for a predetermined purpose. For example, the vehicular electronic device 2000 may search for a Citizens Broadband Radio Service (CBRS), or a private 5G (or local 5G), etc. as a private network, but the disclosure is not limited thereto.

According to an embodiment of the disclosure, the types of network connected to the vehicular electronic device 2000 will be classified into a first network and a second network. The first network may be a public network, and the second network may be a private network.

When an occurrence of a pre-set event is identified as described above in operation S210, the vehicular electronic device 2000 according to an embodiment of the disclosure may identify whether a network currently being connected to the vehicular electronic device 2000 is the first network or the second network.

In operation S230, the vehicular electronic device 2000 according to an embodiment of the disclosure searches for the second network, based on a network state indicating connection to the first network. That is, in response to the network state indicating that the vehicular electronic device 2000 is connected to the first network, the vehicular electronic device 2000 may commence a search for a second network. In other words, if the network state indicates that the vehicular electronic device 2000 is not connected to a private network (the second network), the vehicular electronic device 2000 may search for the second network.

According to an embodiment of the disclosure, the vehicular electronic device 2000 may search for the second network and, when the second network is found, identify whether the service of the second network is available.

According to an embodiment of the disclosure, when the second network is not found, the vehicular electronic device 2000 may retry a search for the second network, based on a preset search period. That is, when the search for the second network does not successfully find the second network, the vehicular electronic device 2000 may retry the search for the second network based on a preset search period. The preset search period may comprise a preset waiting period, the preset waiting period being a length of time that the vehicular electronic device 2000 waits before commencing another search for the second network. When the search for the second network is retried a pre-set number of times or more and the second network is still not successfully found, the vehicular electronic device 2000 may stop the search for the second network. When the search for the second network by the vehicular electronic device 2000 is stopped, the search for the second network may resume when an occurrence of another pre-set event is identified, or after a second preset waiting period has passed.

When it is checked whether the service of the second network is available, the vehicular electronic device 2000 according to an embodiment of the disclosure may perform step S240. That is, when the second network has been found and it has been verified that the service of the second network is available, the vehicular electronic device 2000 may perform step S240.

In operation S240, the vehicular electronic device 2000 according to an embodiment of the disclosure connects to the second network, based on the found second network being available. That is, in response to the second network identified in the search being available, the vehicular electronic device connects to the second network.

According to an embodiment of the disclosure, the vehicular electronic device 2000 may include two or more SIMs. The SIM may be a SIM card inserted into a physical SIM slot or may be an embedded SIM (eSIM), but the disclosure is not limited thereto. When the vehicular electronic device 2000 includes a dual SIM, the dual SIM may have various types. For example, the dual SIM may be, but is not limited to, Dual SIM Standby (DSDS) or Dual SIM Dual Active (DSDA).

According to an embodiment of the disclosure, the vehicular electronic device 2000 may authenticate the user of the vehicular electronic device 2000 for the first network by using a first SIM. When the vehicular electronic device 2000 connects to the second network, the vehicular electronic device 2000 may authenticate the user of the vehicular electronic device 2000 for the second network by using a second SIM.

In operation S250, the vehicular electronic device 2000 according to an embodiment of the disclosure transmits/receives data related to the vehicle by using the second network. That is, the vehicular electronic device 2000 transmits data related to the vehicle to the server using the second network, and receives data related to the vehicle from the server using the second network.

According to an embodiment of the disclosure, the data related to the vehicle 100 may include log data collected by the vehicular electronic device 2000 and data for updating the vehicular electronic device 2000. The log data may include data related to driving of the vehicle 100 that is, a driving history of the vehicle, (e.g., a driving speed, a driving route, a driving distance, and brake performance) and data related to an operation of the electronic device 2000 (e.g., user account related data of the vehicle 100, and payment related data of the user using the vehicular electronic device 2000). The data for updating the vehicular electronic device 2000 may include, for example, data for a firmware update, data for an OS update, or data for updating an application installed in the vehicular electronic device 2000.

According to an embodiment of the disclosure, the vehicular electronic device 2000 may determine the priorities of data items for updating a vehicle. The vehicular electronic device 2000 may request the server 3000 for data for updating the vehicle, based on the priorities. That is, the vehicular electronic device 2000 may request data for updating the vehicle from the server based on the determined priorities of the data items. For example, the vehicular electronic device 2000 may determine the priority of update data by predicting a vehicle charging completion time and assuming that data transmission/reception is possible during the vehicle charging completion time within a limited time period. For example, update data which is likely to be result in the update being completed within the predicted vehicle charging completion time may have a higher priority than update data relating to an update which is unlikely to be completed within the predicted vehicle charging time. As a further example, the vehicular electronic device 2000 may first perform an important firmware update, and may perform an update of other auxiliary vehicle information and/or service information in a second order.

According to an embodiment of the disclosure, specific items included in the data related to the vehicle 100 may differ according to the types of vehicle (e.g., an unmanned vehicle in a factory and an unmanned delivery robot vehicle). This will now be described in detail.

The vehicular electronic device 2000 according to an embodiment of the disclosure may quickly and safely transmit/receive large-capacity data related to the vehicle by using the second network.

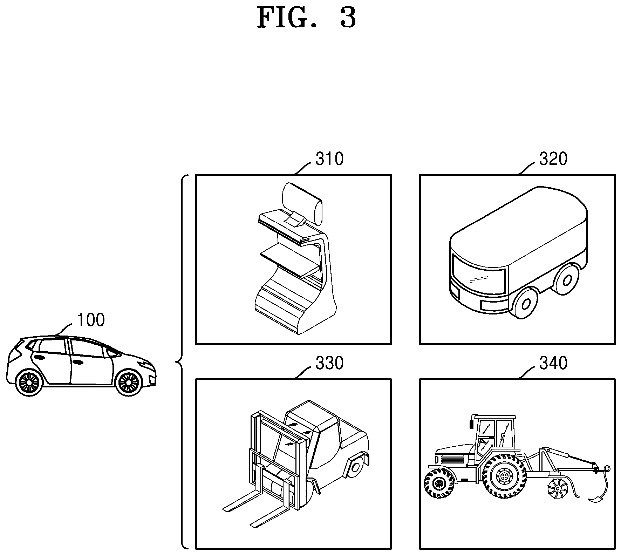

FIG. 3 is a diagram for explaining the types of vehicles on which a vehicular electronic device according to an embodiment of the disclosure is mountable.

Referring to FIG. 3, the vehicle 100 on which the vehicle electronic device 2000 according to an embodiment of the disclosure is mounted may be classified into any of various types according to functions, purposes, and shapes of the vehicle 100.

According to an embodiment of the disclosure, the vehicle 100 may be a robotic vehicle 310 that moves within a store. The robot vehicle 310 may perform various roles, such as serving, guiding, and responding to customers, while driving in a store. As the robot vehicle 310 is operated, the vehicular electronic device 2000 may collect data related to driving of the robot vehicle 310 and log data related to the operation of the vehicular electronic device 2000 mounted in the robot vehicle 310.

According to an embodiment of the disclosure, the vehicle 100 may be an unmanned delivery vehicle 320 that delivers goods, mail, food, etc. indoors/outdoors. The unmanned delivery vehicle 320 may deliver a package to a recipient. As the unmanned delivery vehicle 320 is operated, the vehicular electronic device 2000 may collect data related to driving of the unmanned delivery vehicle 320 and log data related to the operation of the vehicular electronic device 2000 mounted in the unmanned delivery vehicle 320.

According to an embodiment of the disclosure, the vehicle 100 may be an unmanned cargo vehicle 330 that delivers and arranges cargoes in factories, warehouses, and the like. As the unmanned cargo vehicle 330 is operated, the vehicular electronic device 2000 may collect data related to driving of the unmanned delivery vehicle 330 and log data related to the operation of the vehicular electronic device 2000 mounted in the unmanned cargo vehicle 330.

According to an embodiment of the disclosure, the vehicle 100 may be an unmanned agricultural vehicle 340. The unmanned agricultural vehicle 340 may convey a delivery to a recipient. As the unmanned agricultural vehicle 340 is operated, the vehicular electronic device 2000 may collect data related to driving of the unmanned agricultural vehicle 340 and log data related to the operation of the vehicular electronic device 2000 mounted in the unmanned agricultural vehicle 340.

The vehicular electronic device 2000 according to an embodiment of the disclosure may transmit log data to the server 3000, and may receive, from the server 3000, data for updating the vehicle 100 (e.g., the robot vehicle 310, the unmanned delivery vehicle 320, the unmanned cargo vehicle 330, or the unmanned agricultural vehicle 340). The data for updating the vehicle 100 may be based on the transmitted log data. In this case, the vehicular electronic device 2000 may transmit/receive the above-described data by identifying an occurrence of a preset event and connecting the second network, which is a private network, based on the identification of the event occurrence.

The type of vehicle 100 on which the vehicular electronic device 2000 is mounted is not limited to the above-described examples. Types of vehicles may include, for example, various types of vehicles, such as vehicles operated in research laboratories or racing/research tracks for vehicle testing, and transport vehicles operated in airports, aircraft hangars, docks, shipyards, and the like.

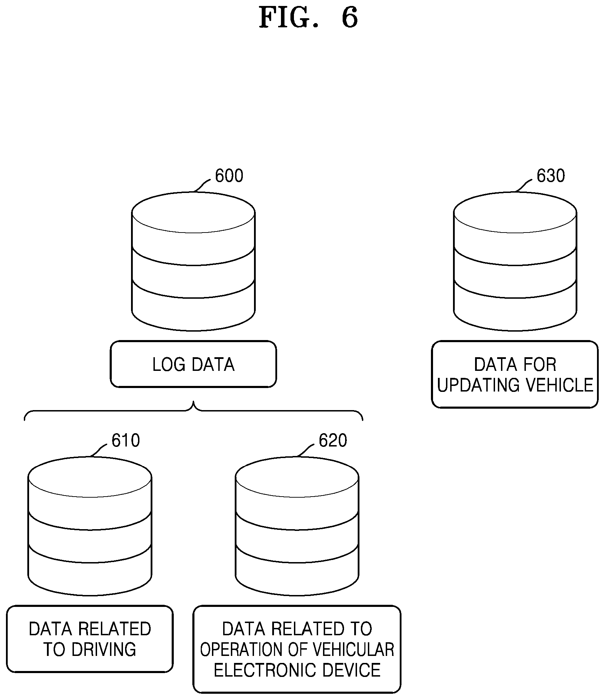

The vehicular electronic device 2000 according to an embodiment of the disclosure may transmit/receive log data collected according to the type of vehicle 100 and update data corresponding to the type of vehicle 100 to and from the server 3000. Specific examples of the log data and the data related to update will be described with reference to FIG. 6.

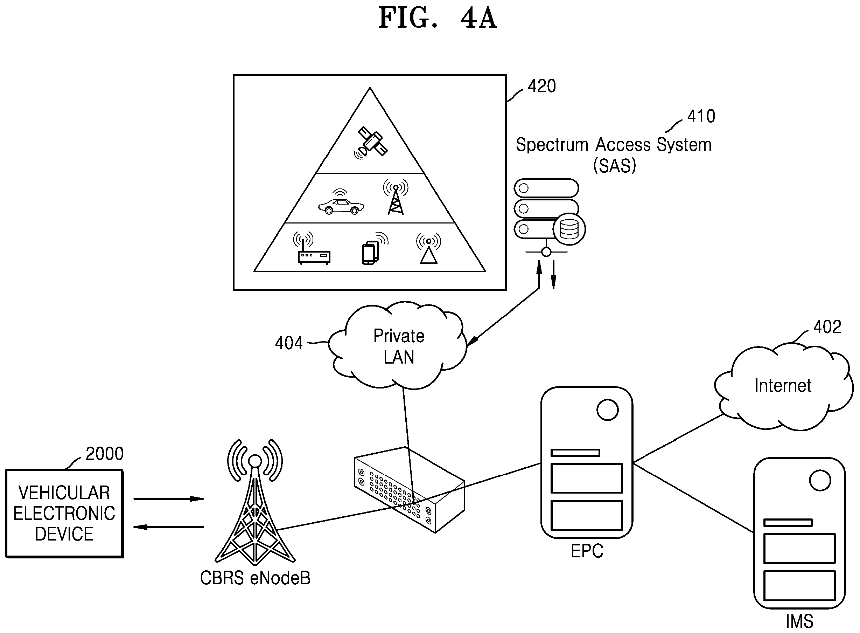

FIG. 4A is a diagram for explaining a second network that is used by a vehicular electronic device according to an embodiment of the disclosure.

In FIG. 4A and the following drawings, a Citizens Broadband Radio Service (CBRS) network is illustrated as the second network, which is a private network. However, the second network is not limited thereto. For example, private 5G communication may be used as the second network. CBRS is a communication band with a 150 MHz bandwidth (3550 MHz to 3700 MHz) in a 3.5 GHz band.

Referring to FIG. 4A, a CBRS network architecture used by the vehicular electronic device 2000 may include, but is not limited to, a CBRS eNodeB (or gNodeB, etc.) capable of supporting a CBRS band, a core network (e.g., an Evolved Packet Core (EPC) capable of providing packet services), and a network for multimedia services (e.g., an IP multimedia subsystem (IMS)).

The vehicular electronic device 2000 may access an Internet 402 or a private local area network (LAN) 404 by using the CBRS network architecture.

According to an embodiment of the disclosure, the CBRS network architecture may include a frequency sharing management system (e.g., a spectrum access system (SAS) 410). The SAS 410 may manage frequency interference when the vehicular electronic device 2000 uses a CBRS frequency.

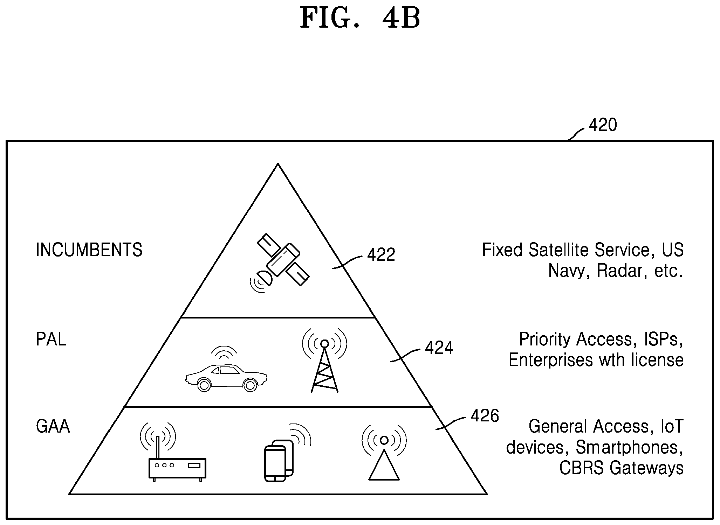

According to an embodiment of the disclosure, CBRS users may be differentiated by a CBRS hierarchy 420. This will now be described in more detail with reference to FIG. 4B.

FIG. 4B is a diagrams for explaining three tier of a CBRS network.

Referring to FIG. 4B, the CBRS hierarchy 420 may include three user tiers. Tier 1 of the CBRS hierarchy 420 is incumbents 422. The incumbents 422 include users such as a fixed satellite service, a US navy, and a radar. Tier 2 of the CBRS hierarchy 420 is a priority access license (PAL) 424. The PAL 424 includes users (e.g., telecoms carriers) who have paid a cost for at least some of CBRS frequencies and have been licensed for the at least some of the CBRS frequencies. Tier 3 of the CBRS hierarchy 420 is a general authorized access (GAA) 426. The GAA 426 includes general electronic devices, IoT devices, smartphones, and the like.

Access of the vehicular electronic device 2000 according to an embodiment of the disclosure to the CBRS network may be performed by the SAS 410, which is a frequency sharing management system. The vehicular electronic device 2000 may obtain an access authority for the CBRS network through the SAS 410 and then may use the CBRS network. In this case, the users of the GAA 426 need to accept interference from the users of the incumbents 422 and the users of the PAL 424 with licenses to some extent, and do not need to cause interference to the users of an upper user layer. The vehicular electronic device 2000 according to an embodiment of the disclosure may be included in the GAA 426 (or, alternatively, included in the PAL 424), and may access the CBRS network by obtaining an access authority for the CBRS network from the SAS 410.

The CBRS network is a private network that may be used to supplement general public wireless communications (e.g., 4G and 5G networks). The CBRS network may be established in, for example, electric vehicle charging stations, distribution warehouses, companies, government offices, hospitals, factories, airports, public places, and stores. When the vehicular electronic device 2000 according to an embodiment of the disclosure identifies a pre-set event (e.g., access to an electric vehicle charging station or charging plug-in), the vehicular electronic device 2000 may obtain, from the SAS 410, an access authority for a CBRS network built in a place where the vehicle 100 is located, and thus may access the CBRS network. In other words, the vehicular electronic device 2000 may access the second network.

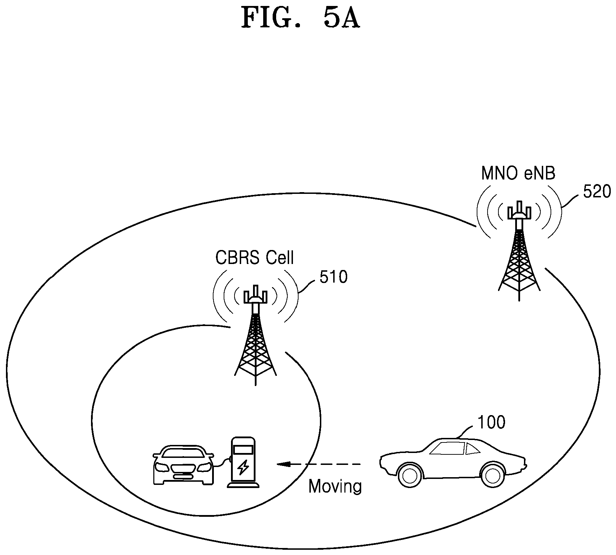

FIG. 5A is a diagram for explaining an operation, performed by a vehicular electronic device according to an embodiment of the disclosure, of identifying an occurrence of a pre-set event.

Referring to FIG. 5A, it may be seen that a coverage range 510, also known as an application range, of the CBRS network is smaller than a coverage range 520 of a mobile network. Since the use of the CBRS network is only possible within the application range 510 of the CBRS network, the vehicular electronic device 2000 according to an embodiment of the disclosure may store location information of a place or location where the CBRS network is or may be established, in order to use the CBRS network.

According to an embodiment of the disclosure, various types of events may be defined as the preset event identified by the vehicular electronic device 2000. For example, the preset event may be whether a vehicle is charged (e.g., wired charging plug-in or wireless charging start). The vehicular electronic device 2000 may identify whether vehicle charging has occurred. The preset event may be the vehicle 100 entering a pre-registered area (e.g., an area where a CBRS network is established (an electric vehicle charging station, a specific location in a factory/store/warehouse, etc.)). The vehicular electronic device 2000 may identify whether the vehicle 100 enters the pre-registered area. If the vehicular electronic device 2000 identifies an occurrence of any of these activities, then the vehicular electronic device 2000 may determine that the preset event has been identified. However, the aforementioned preset event is only an example, and various event triggers for the vehicular electronic device 2000 to start searching for the CBRS network and attempt connection may be set in the vehicular electronic device 2000.

The vehicular electronic device 2000 according to an embodiment of the disclosure may identify the network state of the vehicular electronic device 2000, based on identification of event occurrence, and may perform operations for accessing a private network. That is, the network state of the vehicular electronic device 2000 may be identified in response to the identification of the preset event occurrence. Because this has already been described above, a redundant description thereof will be omitted.

Because the vehicular electronic device 2000 according to an embodiment of the disclosure transmits/receives vehicle-related data by using the CBRS network, the vehicular electronic device 2000 may quickly transmit/receive data of a large capacity and/or high security importance by using an improved network in a private area. That is, the CBRS network is the improved network compared to the public network because the CBRS network enables the vehicular electronic device 2000 to quickly, efficiently and securely transmit or receive a large quantity of data and/or data of a sensitive nature or of high security importance to or from the server.

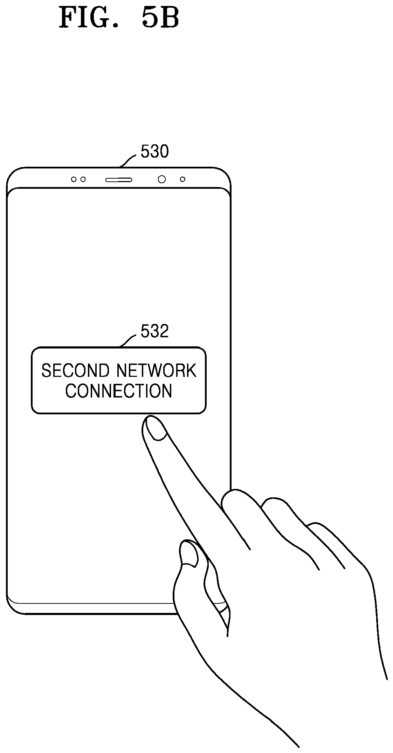

FIG. 5B is a diagram for explaining another operation, performed by a vehicular electronic device according to an embodiment of the disclosure, of identifying an occurrence of a pre-set event.

According to an embodiment of the disclosure, the preset event identified by the vehicular electronic device 2000 may include reception of a user input for a network search. That is, the vehicular electronic device 2000 may detect a user input indicative of a user's intention to connect to the second network. The vehicular electronic device 2000 may identify whether the user input for a network search (e.g., a CBRS network) is received. If the user input for performing a network search is identified, where the network search comprises a search for a private network, then the vehicular electronic device 2000 may determine that the preset event has been identified.

For example, the vehicular electronic device 2000 may receive a user input from a user device 530 connected with the vehicle 100 via a wireless connection (or may also include a wired connection). A user of the user device 530 may, for example, touch a user interface for requesting a second network connection 532 on a screen of the user device 530, in order to transmit/receive vehicle-related data. In this case, the vehicular electronic device 2000 may receive a user input from the user device 530 through wireless/wired communication.

For example, the vehicular electronic device 2000 may receive a user input of touching a user interface for the second network connection 532, with respect to the screen of a display mounted on the vehicle 100. That is, the vehicular electronic device 2000 may receive a user input on a user interface provided on a display mounted in the vehicle. The user input may comprise a touch performed by the user on the user interface to select an icon representing an instruction to connect to the second network, the icon being displayed on the user interface. In this case, the display mounted on the vehicle 100 may be a component included in the vehicular electronic device 2000, and may be mounted in the vehicle 100 separately from the vehicular electronic device 2000 and capable of wireless/wired communication with the vehicular electronic device 2000.

The vehicular electronic device 2000 according to an embodiment of the disclosure may identify the network state of the vehicular electronic device 2000, based on identification of an occurrence of the preset event, and may perform operations for accessing a private network. Because this has already been described above, a redundant description thereof will be omitted.

Because the vehicular electronic device 2000 according to an embodiment of the disclosure transmits/receives vehicle-related data using the CBRS network, the vehicular electronic device 2000 may quickly transmit/receive data of a large capacity and/or high security importance using an improved network in a private area.

FIG. 6 is a diagram for explaining the log data that is collected by a vehicular electronic device according to an embodiment of the disclosure.

According to an embodiment of the disclosure, the vehicular electronic device 2000 may collect, as log data 600, various data obtainable from a parked state and/or a running state of the vehicle 100. The log data 600 may include, but is not limited to, data 610 related to driving of the vehicle 100 and data 620 related to an operation of the vehicular electronic device 2000. The data 610 related to driving of the vehicle 100 may refer to data obtainable as the vehicle 100 drives. The data 610 may constitute data related to a driving history of the vehicle. The data 620 related to the operation of the vehicular electronic device 2000 may refer to data obtainable as the vehicular electronic device 2000 operates while the vehicle 100 is parked and/or driving.

As described above, the vehicle 100 on which the vehicle electronic device 2000 according to an embodiment of the disclosure is mounted may be classified into any of various types according to functions, purposes, and shapes of the vehicle 100. Accordingly, the log data 600, or the type of log data 600, collected for each vehicle may vary.

The vehicular electronic device 2000 according to an embodiment of the disclosure may collect different log data 600 collectable according to the type of vehicle 100 which the vehicular electronic device 2000 is associated with, and may transmit the collected different log data 600 to the server 3000. The vehicular electronic device 2000 may receive data 630 for updating the vehicle 100 from the server 3000. The data 630 for updating the vehicle 100 may be determined based on the log data 600. That is, the server 3000 may transmit data 630 for updating the vehicle 100 to the vehicle 100 based on the log data 600 received from the vehicular electronic device 2000.

The log data 600 and the data 630 for vehicle update, or updating a vehicle, will now be described by illustrating the type of vehicle 100 described above with reference to FIG. 3, to help understanding.

According to an embodiment of the disclosure, the vehicle 100 may be the robot vehicle 310 that moves within a store. While the vehicle may be a robot vehicle 310 that moves within other environments such as government offices, companies, etc. only a store is described herein for convenience of description. However, it should be clear to the skilled person that the invention is not limited to this example. When the vehicular electronic device 2000 is mounted on the robot vehicle 310, the vehicular electronic device 2000 may collect the log data 600 of the robot vehicle 310. In detail, the vehicle electronic device 2000 may collect a driving speed, a driving route, a driving distance, a driving time, environment information about an environment on the driving route, on/off information of an engine or motor, data related to autonomous driving, etc. This data may comprise the data 610 related to the driving of the robot vehicle 310. The vehicular electronic device 2000 may collect, as the log data 600, various pieces of information obtainable as the vehicular electronic device 2000 operates within the robot vehicle 310, such as power on/off information of the vehicular electronic device 2000, product information about products sold at a store, network state information, visit information of a store customer, user account information of the store customer, order product information, payment information, and drivable residual battery information. This data may comprise the data 620 related to the operation of the vehicular electronic device 2000 in the robot vehicle 310. However, the log data 600 of the robot vehicle 310 is not limited to the aforementioned examples. The vehicular electronic device 2000 may transmit the collected log data 600 of the robot vehicle 310 to the server 3000. The collected log data 600 may be transmitted to the server 3000 using the second network.

According to an embodiment of the disclosure, the vehicular electronic device 2000 may receive the data 630 for updating the robot vehicle 310 from the server 3000. The data 630 may be transmitted to the vehicular electronic device 2000 using the second network. For example, the vehicular electronic device 2000 may receive data for performing a firmware update, for performing an OS update, or for updating an application installed in the robot vehicle 310. The vehicular electronic device 2000 may also receive data including store information to be provided to a user using the robot vehicle 310 when visiting the store, product information about products in the store, in-store map information, current event/discount information, and the like. However, the data 630 for updating the robot vehicle 310 is not limited to the aforementioned examples. The data 630 for updating the robot vehicle 310 may be determined based on the log data 600. For example, when a predetermined number of products are sold and exhausted in a store, the robot vehicle 310 may be updated so that product information to be displayed on the robot vehicle 310 may be displayed as sold out.

According to an embodiment of the disclosure, the vehicle 100 may be an unmanned (or manned) delivery vehicle 320 that delivers goods, mail, food, etc. indoors/outdoors. The unmanned delivery vehicle 320 may deliver a package to a recipient.

According to an embodiment of the disclosure, when the vehicular electronic device 2000 is mounted on the unmanned delivery vehicle 320, the vehicular electronic device 2000 may collect the log data 600 of the unmanned delivery vehicle 320. In detail, the vehicle electronic device 2000 may collect a driving speed, a driving route, a driving distance, a driving time, environment information about an environment on the driving route, engine on/off information (or motor on/off information), data related to autonomous driving, etc., which are the data 610 related to the driving of the robot vehicle 320. The vehicular electronic device 2000 may collect, as the log data 600, various pieces of information obtainable as the vehicular electronic device 2000 operates within the unmanned delivery vehicle 310, such as power on/off information of the vehicular electronic device 2000, outdoor traffic volume information and traffic signal information to a delivery destination, road accident occurrence information, building floor/room number information for indoor delivery, delivery information, delivery sender/receiver information, orderer payment information, user account management information, delivery order information, expected delivery time information & delivery completion time, expected delivery route & actual route information, and drivable residual battery information of the unmanned delivery vehicle 320, which are related to an operation of the in-vehicle electronic device 2000 in the unmanned delivery vehicle 320. The vehicular electronic device 2000 may transmit the log data 600 of the unmanned delivery vehicle 320 to the server 3000. The log data 600 may be transmitted using the second network.

According to an embodiment of the disclosure, the vehicular electronic device 2000 may receive the data 630 for updating the unmanned delivery vehicle 320 from the server 3000. The data 630 may be received using the second network. For example, the vehicular electronic device 2000 may receive data for firmware update, data for OS update, data for updating an application installed in the unmanned delivery vehicle 320, and data including real-time traffic condition information, newly added delivery information, and the like. However, the data 630 for updating the unmanned delivery vehicle 320 is not limited to the aforementioned examples.

According to an embodiment of the disclosure, the vehicle 100 may be an unmanned (or manned) cargo vehicle 330 that delivers and arranges cargoes in factories, warehouses, and the like. When the vehicular electronic device 2000 is mounted on the unmanned cargo vehicle 330, the vehicular electronic device 2000 may collect the log data 600 of the unmanned cargo vehicle 330. In detail, the vehicle electronic device 2000 may collect a driving speed, a driving route, a driving distance, a driving time, on/off information of an engine or motor, data related to autonomous driving, etc., which are the data 610 related to the driving of the unmanned cargo vehicle 330. The vehicular electronic device 2000 may collect, as the log data 600, various pieces of information obtainable as the vehicular electronic device 2000 operates within the unmanned cargo vehicle 330, such as power on/off information of the vehicular electronic device 2000, logistics warehousing/releasing information in a factory/warehouse, stock information, factory/warehouse visitor information, and drivable residual battery information, etc., which are related to an operation of the vehicular electronic device 2000 in the unmanned cargo vehicle 330. The vehicular electronic device 2000 may transmit the log data 600 of the unmanned cargo vehicle 330 to the server 3000, and may receive the data 630 for updating the unmanned cargo vehicle 330 from the server 3000.

According to an embodiment of the disclosure, the vehicle 100 may be an unmanned (or manned) agricultural vehicle 340. The vehicular electronic device 2000 may collect the log data 600 of the unmanned agricultural vehicle 340, and may receive the data 630 for updating the unmanned agricultural vehicle 340 from the server 3000. For example, the vehicular electronic device 2000 may manage and update environment information such as a state, a quantity, and a temperature/humidity of crops grown using the unmanned agricultural vehicle 340.

According to an embodiment of the disclosure, the vehicle 100 may be, for example, vehicles operated in research laboratories or racing/research tracks for vehicle testing, and transport vehicles operated in airports, aircraft hangars, docks, shipyards, and the like. The vehicular electronic device 2000 may collect the log data 600 of the vehicle 100, and may receive the data 630 for updating the vehicle 100 from the server 3000.

For example, when the vehicle 100 is a vehicle operated in a laboratory or racing/research track for vehicle testing, the vehicular electronic device 2000 may collect and manage the log data 600 including various vehicle driving data, such as a speed for each wheel, brake performance, a wheel balance, a rotation angle, and suspension, so that the log data 600 may be utilized to research/develop and test the vehicle 100. In this case, data of high security importance for research/development and testing may be transmitted/received using the second network, which is a private network.

For example, when the vehicle 100 is a transport vehicle or the like operated in an airport, an aircraft hangar, a dock, a shipyard, etc., the vehicular electronic device 2000 may maintain and update sensitive internal data unique to logistics and aviation/shipping companies, and various data related to aircraft/ship parts and maintenance. In this case, the vehicular electronic device 2000 may transmit/receive the above-described exemplary data of the log data 600 and the data 630 for updating the vehicle 100, by using the second network, which is a private network.

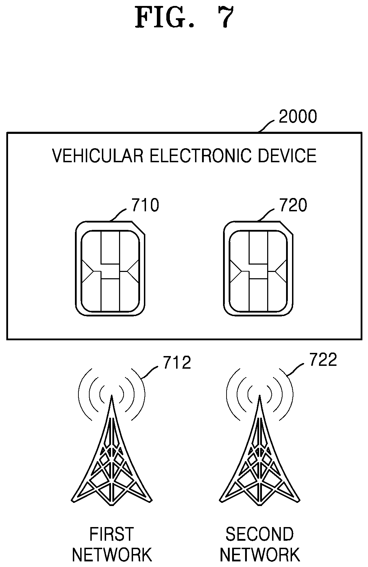

FIG. 7 is a diagram for explaining a subscriber identity module (SIM) included in the vehicular electronic device according to an embodiment of the disclosure.

According to an embodiment of the disclosure, the vehicular electronic device 2000 may include two or more SIMs. The SIM may be a SIM card inserted into a physical SIM slot or may be an embedded SIM (eSIM), but the disclosure is not limited thereto.

According to an embodiment of the disclosure, the vehicular electronic device 2000 may authenticate the user of the vehicular electronic device 2000 for a first network 712 by using a first SIM 710. When the vehicular electronic device 2000 connects to a second network 722, the vehicular electronic device 2000 may authenticate the user of the vehicular electronic device 2000 for a second network 722 by using a second SIM 720.

When the vehicular electronic device 2000 includes a dual SIM, the dual SIM may have various types. For example, the dual SIM may be, but is not limited to, Dual SIM Standby (DSDS) or Dual SIM Dual Active (DSDA).

According to an embodiment of the disclosure, when the vehicular electronic device 2000 is currently using the first network 712 and the vehicular electronic device 2000 attempts to search for the second network 722 as pre-set conditions are satisfied, the vehicular electronic device 2000 may identify the type of the dual SIM. The vehicular electronic device 2000 may determine whether to start searching for the second network based on the type of the dual SIM type and first network use information of the vehicular electronic device 2000.

For example, the type of each of the first SIM 710 and the second SIM 720 may be Dual SIM Standby (DSDS). In the case of the DSDS type, the first SIM 710 and the second SIM 720 are normally in a standby state, but, when one SIM is in a call state, the other SIM is not available. According to an embodiment of the disclosure, the vehicular electronic device 2000 may identify use information of the first network 712 of the first SIM 710, before performing a search for and a connection to the second network 722 by using the second SIM 720. For example, when the first SIM 710 is in a call by using the first network 712, the vehicular electronic device 2000 may wait until the call using the first SIM 710 is terminated, and then, when the call is terminated, the vehicular electronic device 2000 may enable a communication service for the second network 722 to be connected using the second SIM 720.

For example, the type of each of the first SIM 710 and the second SIM 720 may be Dual SIM Dual Active (DSDA). In this case, simultaneous activation of the first SIM 710 and the second SIM 720 is possible, and thus, even when the use information of the first network 712 indicates a call state, the vehicular electronic device 2000 may enable a communication service for the second network 722 to be connected using the second SIM 720.

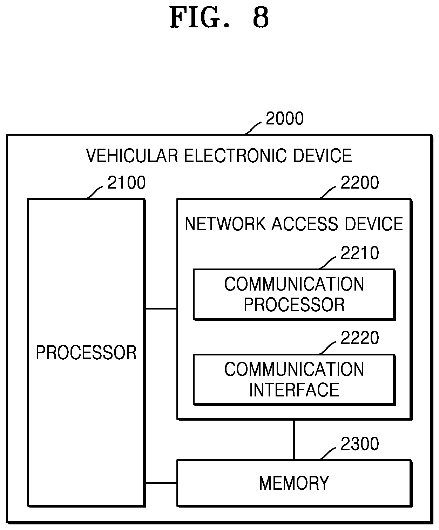

FIG. 8 is a block diagram of a configuration of the vehicular electronic device according to an embodiment of the disclosure.

Referring to FIG. 8, the vehicular electronic device 2000 may include a processor 2100, a network access device 2200, and a memory 2300. For example, the network access device 2200 may include a communication processor 2210 and a communication interface 2220.

The vehicular electronic device 2000 according to an embodiment of the disclosure may be an electronic device that transmits/receives data used for operating the vehicle 100 to/from a server, for example, an electronic device that provides a communication function with the server 3000. In detail, the vehicular electronic device 2000 may perform communication between the vehicle 100 and the server 3000 to transmit/receive information necessary for driving or using the vehicle. The vehicular electronic device 2000 may be an electronic device for implementing IVI technology, which provides services, information, and/or content to a user.

The processor 2100 may control overall operations of the vehicular electronic device 2000. For example, the processor 2100 may transmit/receive vehicle-related data and provide services, information, and/or content to users, by executing one or more instructions of the program stored in the memory 2300. One or more processors 2100 may be included.

The processor 2100 may include, but is not limited to, at least one of a central processing unit, a microprocessor, a graphics processing unit, application specific integrated circuits (ASICs), digital signal processors (DSPs), digital signal processing devices (DSPDs), programmable logic devices (PLDs), field programmable gate arrays (FPGAs), an application processor, a neural processing unit, or an Al dedicated processor designed with a hardware structure specialized for processing an Al model.

The network access device 2200 is a configuration controlling data transmission/reception of the vehicular electronic device 2000, and may be in charge of communications between the vehicle and an external electronic device (for example, the server 3000 and a mobile device). The network access device 2200 may perform a network search necessary for the vehicular electronic device 2000 to use a communication service of the first and/or second networks.

The communication processor 2210 may control overall operations of the network access device 2200. For example, the communication processor 2210 may cause the network access device 2200 to search for and access the first and second networks, by executing the one or more instructions of the program stored in the memory 2300. In this case, access authority to the second network may be obtained using the aforementioned SAS.

The communication processor 2210 may include, but is not limited to, at least one of a central processing unit, a microprocessor, application specific integrated circuits (ASICs), digital signal processors (DSPs), digital signal processing devices (DSPDs), programmable logic devices (PLDs), field programmable gate arrays (FPGAs), a telematics control unit, or a communication processor (CP) module. The CP module is a modem chipset, and a network may perform communication with an external electronic device (e.g., the server 3000) via a communication network according to the 3rd generation (3G), 4G, or 5G communication standard. However, when the processor 2100 may support a function performed by the communication processor 2220, the network access device 2200 may be omitted.

The communication interface 2220 may perform data communications with the server 3000 or a base station by using at least one of data communication methods including a wireless LAN, Wi-Fi, Bluetooth, Zigbee, Wi-Fi Direct (WFD), infrared communication (IrDA), Bluetooth Low Energy (BLE), Wireless Broadband Internet (Wibro), World Interoperability for Microwave Access (WiMAX), a shared wireless access protocol (SWAP), Wireless Gigabit Alliance (WiGig), or RF communication.

The communication interface 2220 may include at least one communication circuit and/or module performing wireless communication. For example, the communication interface 2220 may include at least one of an antenna, a Bluetooth module, a Wi-Fi module, a global positioning system (GPS) module, or an RF module.

The communication interface 2220 may include at least one short-range communication module that performs communication according to a communication standard such as Bluetooth Low Energy (BLE), near field communication (NFC)/radio frequency identification (RFID), Wi-Fi Direct, ultra-wideband (UWB), and/or ZIGBEE.

Instructions, a data structure, and program code readable by the processor 2100 and the communication processor 2210 may be stored in the memory 2300. According to embodiments of the disclosure, operations performed by the processor 2100 and the communication processor 2210 may be implemented by executing the instructions or codes of a program stored in the memory 2300.

The memory 2300 may include at least one of a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, or an optical disk.

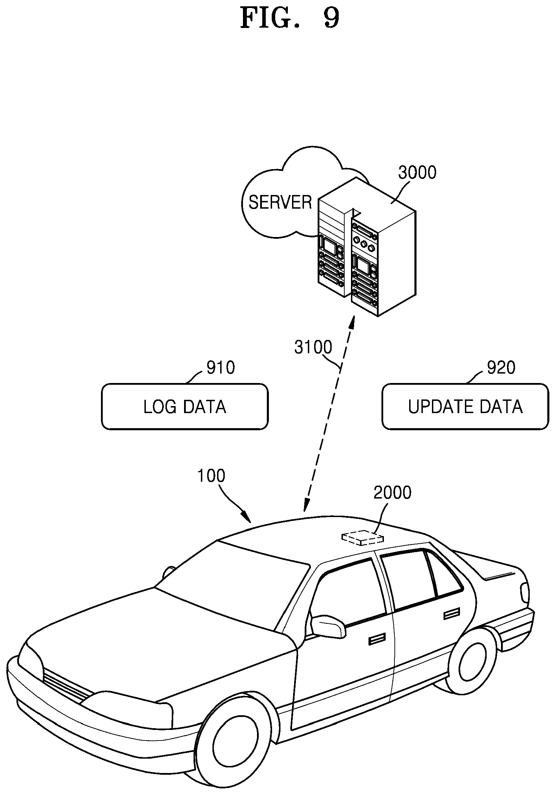

FIG. 9 is a diagram illustrating communication of the vehicular electronic device with the server 3000, according to an embodiment of the disclosure.

Referring to FIG. 9, the vehicular electronic device 2000 mounted on the vehicle 100 is shown on the roof of the vehicle 100. However, this does not limit the location of the vehicular electronic device 2000.

The server 3000 may include a server, a server system, a server-based apparatus, or the like, which transmits/receives data to/from the vehicular electronic device 2000 via a communication network 3100 and processes the data. The communication network 3100 may be the first network (e.g., a 4G/5G network), which is a public network, and/or the second network (e.g., a CBRS network), which is a private network, according to the above-described embodiments.

The vehicular electronic device 2000 may transmit/receive data for a general communication service to/from a server or the like of a communication service provider by using the first network, and transmit/receive data related to the vehicle 100 to/from the server 3000 by using the second network.

For example, the vehicular electronic device 2000 may transmit log data 910 to the server 3000 by using the second network. The log data 910 may include the data related to driving of the vehicle 100 and the data related to an operation of the vehicular electronic device 2000. This has been described above, so redundant descriptions thereof will be omitted.

For example, the vehicular electronic device 2000 may receive update data 920 related to vehicle update from the server 3000 by using the second network, stores the received update data 920, and perform updating. This has been described above, so redundant descriptions thereof will be omitted.

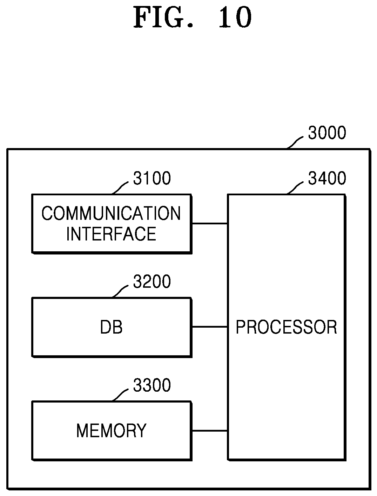

FIG. 10 is a block diagram of the server according to an embodiment of the disclosure.

According to an embodiment of the disclosure, the server 3000 may be mutually connected to the vehicular electronic device 2000 in a wireless communication manner, and perform data communication.

The server 3000 according to an embodiment of the disclosure may include at least a communication interface 3100, a database (DB) 3200, and a processor 3400.

The communication interface 3100 according to an embodiment of the disclosure may include at least one component that enables communication via a local area network (LAN), a wide area network (WAN), a value added network (VAN), a mobile radio communication network, a satellite communication network, and a combination thereof.

The communication interface 3100 according to an embodiment of the disclosure may receive log data from the vehicular electronic device 2000 and transmit update data to the vehicular electronic device 2000. The communication interface 2100 may also transmit a service, information, and/or content, to the vehicular electronic device 2000 so as to provide the service, information, and/or content to a user.

The DB 3200 may store data received from the vehicular electronic device 2000, data to be received from or provided to another external device (not shown), and data desired by the server 3000 to be provided to the vehicular electronic device 2000.

The memory 3300 may store various pieces of data, programs, or applications for driving and controlling the server 3000. A program stored in the memory 3300 may include one or more instructions. The program (one or more instructions) or application stored in the memory 3300 may be executed by the processor 3400.

The processor 3400 may entirely control the server 3000. The processor 3400 may execute one or more programs stored in the memory 3300.

The processor 3400 according to an embodiment of the disclosure may include an application processor (AP), a central processing unit (CPU), a graphics processing unit (GPU), a neural processing unit, or an Al-dedicated processor designed in a hardware structure specialized for processing of an Al model.

The processor 3400 may control the server 3000 to provide, to the vehicular electronic device 2000, vehicle-related data, service, information, and content.

The disclosure provides a method of transmitting/receiving vehicle-related data by performing a network search operation based on an occurrence of a preset event or by causing a preset event, in an efficient network search, selection, and connection method of the vehicular electronic device 2000. When vehicular electronic devices transmit/receive data using a public network provided by a general communication service provider, a large amount of data can be used. This large data use can lead to a significant financial burden on a user of the vehicle. In addition, some of the data may include sensitive information of a high security importance. When vehicular electronic devices transmit/receive such high security data in a public network, there is a risk of unwanted data leakage.

As such, a method performed by vehicular electronic devices for searching for a private network in order to efficiently transmit/receive data is required. That is, an efficient network search method capable of searching for and using a private network, and consequently reducing resources such as batteries of vehicular electronic devices is required.

The technical problems of the disclosure are not limited to the aforementioned features, and other unstated technical problems will be clearly understood by one of ordinary skill in the art in view of descriptions below.

According to an aspect of the disclosure, an operation method of a vehicular electronic device may be provided. The operation method may include identifying an occurrence of a preset event. The operation method may further include identifying a network state of the vehicular electronic device, based on identification of the occurrence of the preset event. The operation method may further include searching for a second network, based on the network state indicating connection to a first network. The operation method may further include accessing the second network, based on the found second network being available; and The operation method may further include transmitting/receiving data related to the vehicle to/from the server by using the second network. The first network may be a public network, and the second network may be a private network.

The identifying of the occurrence of the preset event may include identifying at least one of whether the vehicle is charged or whether the vehicle enters a pre-registered area.

The identifying of the occurrence of the preset event may further include identifying whether a user input for network search is received by the vehicular electronic device.

Data related to the vehicle may include log data related to driving of the vehicle and data related to an operation of the vehicular electronic device. The operation method may further include collecting the log data as the vehicle is operated.

The transmitting/receiving of the data related to the vehicle to/from the server by using the second network may include sending the log data to the server. The transmitting/receiving of the data related to the vehicle to/from the server by using the second network may further include receiving, from the server, data for updating the vehicle, the data being determined based on the log data.

The operation method may further include determining a priority of a data item for updating the vehicle. The operation method may further include requesting the server for the data for updating the vehicle, based on the priority.

The second network may be a Citizens Broadband Radio Service (CBRS) or local 5^{th} generation mobile communication (5G).

The vehicular electronic device may include two or more subscriber identity modules (SIMs). The operation method may further include authenticating a user of the vehicular electronic device for the first network by using a first SIM. The operation method may further include authenticating a user of the vehicular electronic device for the second network by using a second SIM.

The operation method may further include identifying types of the first SIM and the second SIM. The searching for the second network may include starting searching for the second network, based on the types of the first SIM and the second SIM and first network use information of the vehicular electronic device.

The searching for the second network may include retrying the search for the second network at preset search intervals, based on the second network being not found.

Embodiments of the disclosure can also be embodied as a storage medium including instructions executable by a computer such as a program module executed by the computer. A computer readable medium can be any available medium which can be accessed by the computer and includes all volatile/non-volatile and removable/non-removable media. Further, the computer readable medium may include all computer storage and communication media. The computer storage medium includes all volatile/non-volatile and removable/non-removable media embodied by a certain method or technology for storing information such as computer readable instruction code, a data structure, a program module or other data. Communication media may typically include computer readable instructions, data structures, or other data in a modulated data signal, such as program modules.

In addition, computer-readable storage media may be provided in the form of non-transitory storage media. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

While the disclosure has been particularly shown and described with reference to exemplary embodiments thereof, it will be understood that various changes in form and details may be made therein without departing from the spirit and scope of the disclosure. Thus, the above-described embodiments should be considered in descriptive sense only and not for purposes of limitation. For example, each component described as a single type may be implemented in a distributed manner, and similarly, components described as being distributed may be implemented in a combined form.

The scope of the disclosure is indicated by the scope of the claims to be described below rather than the above detailed description, and all changes or modified forms derived from the meaning and scope of the claims and the concept of equivalents thereof should be interpreted as being included in the scope of the disclosure.

## Claims

1. An operation method of a vehicular electronic device 2000 for a vehicle, the operation method comprising:
identifying an occurrence of a preset event, the preset event including both the vehicle being located in a pre-registered area and being in a charging state (S210);
identifying a network state of the vehicular electronic device, in response to identifying the occurrence of the preset event (S220);
searching for a second network, in response to the identified network state indicating a connection of the vehicular electronic device to a first network (S230);
in response to detecting the second network, accessing the second network (S240); and
transmitting/receiving security data related to the vehicle to/from a server using the second network (S250),
wherein the first network is a public network, and the second network is a private network.

2. The operation method of claim 1, wherein the identifying of the occurrence of the preset event further comprises identifying a receipt of a user input for requesting the searching of network by the vehicular electronic device.

3. The operation method of claim 1 or claim 2, wherein
data related to the vehicle comprises log data related to a driving history of the vehicle and data related to an operation of the vehicular electronic device, and
the operation method further comprises collecting the log data as the vehicle is operated.

4. The operation method of claim 3, wherein the transmitting/receiving of the data related to the vehicle to/from the server by using the second network comprises:
sending the log data to the server; and
receiving, from the server, data for updating the vehicle, the data for updating the vehicle being determined based on the log data.

5. The operation method of claim 4, further comprising:
determining a priority of a data item for updating the vehicle; and
requesting, from the server, the data for updating the vehicle, based on the determined priority.

6. The operation method of any of the preceding claims, wherein
the vehicular electronic device comprises a first subscriber identity module, SIMs,, and a second SIM; and
the operation method further comprises:
authenticating a user of the vehicular electronic device for the first network using the first SIM; and
authenticating the user of the vehicular electronic device for the second network using the second SIM.

7. A vehicular electronic device 2000 for a vehicle, the vehicular electronic device comprising: a communication interface 2220;
a memory 2300 storing one or more instructions; and
at least one processor 2100 configured to execute the one or more instructions stored in the memory;
wherein the at least one processor 2100 is further configured to:
identify an occurrence of a preset event, the preset event including both the vehicle being located in a pre-registered area and being in a charging state;
identify a network state of the vehicular electronic device, in response to identifying the occurrence of the preset event;
search for a second network, in response to the identified network state indicating a connection of the vehicular electronic device to a first network;
in response to detecting the second network, access the second network; and
transmit/receive security data related to the vehicle to/from the server using the second network;
wherein the first network is a public network, and the second network is a private network.

8. The vehicular electronic device of claim 7, wherein the at least one processor is further configured to identify the occurrence of the preset event by identifying the receipt of a user input for network search by the vehicular electronic device.

9. The vehicular electronic device of claim 7 or claim 8, wherein
data related to the vehicle comprises log data related to a driving history of the vehicle and data related to an operation of the vehicular electronic device, and
the at least one processor is further configured to collect the log data as the vehicle is operated.

10. The vehicular electronic device of claim 9, wherein the at least one processor is further configured to:
send the log data to the server; and
receive, from the server, data for updating the vehicle, the data for updating the vehicle being determined based on the log data.

11. The vehicular electronic device of claim 10, wherein the one or more processors are configured to execute the one or more instructions stored in the memory to:
determine priority of a data item for updating the vehicle; and
request, from the server, the data for updating the vehicle, based on the determined priority.

12. The vehicular electronic device of any of claims 7 to 11, wherein
the vehicular electronic device comprises a first subscriber identity module, SIMs, and a second SIM; and
the at least one processor is further configured to:
authenticate a user of the vehicular electronic device for the first network using the first SIM; and
authenticate the user of the vehicular electronic device for the second network using the second SIM.

13. A computer-readable recording medium having recorded thereon a computer program, which, when executed by a computer, performs the method of any of claims 1 to 6.

## Patentansprüche

1. Betriebsverfahren einer fahrzeugelektronischen Vorrichtung 2000 für ein Fahrzeug, wobei das Betriebsverfahren umfasst:
Identifizieren eines Auftretens eines vorgewählten Ereignisses, wobei das vorgewählte Ereignis beinhaltet, dass sich das Fahrzeug sowohl in einem vorregistrierten Bereich befindet als auch in einem Ladezustand ist (S210);
Identifizieren eines Netzwerkzustands der fahrzeugelektronischen Vorrichtung als Reaktion auf das Identifizieren des Auftretens des vorgewählten Ereignisses (S220);
Suchen nach einem zweiten Netzwerk als Reaktion darauf, dass der identifizierte Netzwerkzustand eine Verbindung der fahrzeugelektronischen Vorrichtung mit einem ersten Netzwerk angibt (S230);
als Reaktion auf das Detektieren des zweiten Netzwerks, Zugreifen auf das zweite Netzwerk (S240); und
Übertragen/Empfangen von Sicherheitsdaten, die sich auf das Fahrzeug beziehen, an einen/aus einem Server unter Verwendung des zweiten Netzwerks (S250),
wobei das erste Netzwerk ein öffentliches Netzwerk ist und das zweite Netzwerk ein privates Netzwerk ist.

2. Betriebsverfahren nach Anspruch 1, wobei das Identifizieren des Auftretens des vorgewählten Ereignisses ferner das Identifizieren eines Empfangs einer Benutzereingabe zum Anfordern der Netzwerksuche durch die fahrzeugelektronische Vorrichtung umfasst.

3. Betriebsverfahren nach Anspruch 1 oder Anspruch 2, wobei
Daten, die sich auf das Fahrzeug beziehen, Protokolldaten, die sich auf eine Fahrhistorie des Fahrzeugs beziehen, und Daten, die sich auf einen Betrieb der fahrzeugelektronischen Vorrichtung beziehen, umfassen, und
das Betriebsverfahren ferner das Sammeln der Protokolldaten, während das Fahrzeug betrieben wird, umfasst.

4. Betriebsverfahren nach Anspruch 3, wobei das Übertragen/Empfangen der Daten, die sich auf das Fahrzeug beziehen, an den/aus dem Server unter Verwendung des zweiten Netzwerks Folgendes umfasst:
Senden der Protokolldaten an den Server; und
Empfangen, aus dem Server, von Daten zum Aktualisieren des Fahrzeugs, wobei die Daten zum Aktualisieren des Fahrzeugs basierend auf den Protokolldaten ermittelt werden.

5. Betriebsverfahren nach Anspruch 4, ferner umfassend:
Ermitteln einer Priorität eines Datenelements zum Aktualisieren des Fahrzeugs; und
Anfordern, aus dem Server, der Daten zum Aktualisieren des Fahrzeugs, basierend auf der ermittelten Priorität.

6. Betriebsverfahren nach einem der vorhergehenden Ansprüche, wobei
die fahrzeugelektronische Vorrichtung ein erstes Teilnehmeridentitätsmodul, SIMs, und ein zweites SIM umfasst; und
das Betriebsverfahren ferner umfasst:
Authentifizieren eines Benutzers der fahrzeugelektronischen Vorrichtung für das erste Netzwerk unter Verwendung des ersten SIM; und
Authentifizieren des Benutzers der fahrzeugelektronischen Vorrichtung für das zweite Netzwerk unter Verwendung des zweiten SIM.

7. Fahrzeugelektronische Vorrichtung 2000 für ein Fahrzeug, wobei die fahrzeugelektronische Vorrichtung umfasst: eine Kommunikationsschnittstelle 2220;
einen Speicher 2300, der eine oder mehrere Anweisungen speichert; und
mindestens einen Prozessor 2100, der konfiguriert ist zum Ausführen der einen oder mehreren in dem Speicher gespeicherten Anweisungen,
wobei der mindestens eine Prozessor 2100 ferner konfiguriert ist zum:
Identifizieren eines Auftretens eines vorgewählten Ereignisses, wobei das vorgewählte Ereignis beinhaltet, dass sich das Fahrzeug sowohl in einem vorregistrierten Bereich befindet als auch in einem Ladezustand ist;
Identifizieren eines Netzwerkzustands der fahrzeugelektronischen Vorrichtung als Reaktion auf das Identifizieren des Auftretens des vorgewählten Ereignisses;
Suchen nach einem zweiten Netzwerk als Reaktion darauf, dass der identifizierte Netzwerkzustand eine Verbindung der fahrzeugelektronischen Vorrichtung mit einem ersten Netzwerk angibt;
als Reaktion auf das Detektieren des zweiten Netzwerks, Zugreifen auf das zweite Netzwerk; und
Übertragen/Empfangen von Sicherheitsdaten, die sich auf das Fahrzeug beziehen, an den/aus dem Server unter Verwendung des zweiten Netzwerks;
wobei das erste Netzwerk ein öffentliches Netzwerk ist und das zweite Netzwerk ein privates Netzwerk ist.

8. Fahrzeugelektronische Vorrichtung nach Anspruch 7, wobei der mindestens eine Prozessor ferner konfiguriert ist zum Identifizieren des Auftretens des vorgewählten Ereignisses durch Identifizieren des Empfangs einer Benutzereingabe zur Netzwerksuche durch die fahrzeugelektronische Vorrichtung.

9. Fahrzeugelektronische Vorrichtung nach Anspruch 7 oder Anspruch 8, wobei
Daten, die sich auf das Fahrzeug beziehen, Protokolldaten, die sich auf eine Fahrhistorie des Fahrzeugs beziehen, und Daten, die sich auf einen Betrieb der fahrzeugelektronischen Vorrichtung beziehen, umfassen, und
der mindestens eine Prozessor ferner konfiguriert ist zum Sammeln der Protokolldaten, während das Fahrzeug betrieben wird.

10. Fahrzeugelektronische Vorrichtung nach Anspruch 9, wobei der mindestens eine Prozessor ferner konfiguriert ist zum:
Senden der Protokolldaten an den Server; und
Empfangen, aus dem Server, von Daten zum Aktualisieren des Fahrzeugs, wobei die Daten zum Aktualisieren des Fahrzeugs basierend auf den Protokolldaten ermittelt werden.

11. Fahrzeugelektronische Vorrichtung nach Anspruch 10, wobei der eine oder mehrere Prozessoren konfiguriert sind zum Ausführen der einen oder mehreren in dem Speicher gespeicherten Anweisungen zum:
Ermitteln der Priorität eines Datenelements zum Aktualisieren des Fahrzeugs; und
Anfordern, aus dem Server, der Daten zum Aktualisieren des Fahrzeugs, basierend auf der ermittelten Priorität.

12. Fahrzeugelektronische Vorrichtung nach einem der Ansprüche 7 bis 11, wobei
die fahrzeugelektronische Vorrichtung ein erstes Teilnehmeridentitätsmodul, SIMs, und ein zweites SIM umfasst; und
der mindestens eine Prozessor ferner konfiguriert ist zum:
Authentifizieren eines Benutzers der fahrzeugelektronischen Vorrichtung für das erste Netzwerk unter Verwendung des ersten SIM; und
Authentifizieren des Benutzers der fahrzeugelektronischen Vorrichtung für das zweite Netzwerk unter Verwendung des zweiten SIM.

13. Computerlesbares Aufzeichnungsmedium mit einem darauf aufgezeichneten Computerprogramm, das, wenn von einem Computer ausgeführt, das Verfahren nach einem der Ansprüche 1 bis 6 durchführt.

## Revendications

1. Procédé de fonctionnement d'un dispositif électronique de véhicule 2000 pour un véhicule, le procédé de fonctionnement comprenant :
l'identification d'une occurrence d'un événement prédéfini, l'événement prédéfini comprenant le fait que le véhicule est à la fois situé dans une zone préenregistrée et dans un état de charge (S210) ;
l'identification d'un état de réseau du dispositif électronique de véhicule, en réponse à l'identification de l'occurrence de l'événement prédéfini (S220) ;
la recherche d'un second réseau, en réponse au fait que l'état de réseau identifié indique une connexion du dispositif électronique de véhicule à un premier réseau (S230) ;
en réponse à la détection du second réseau, l'accès au second réseau (S240) ; et
la transmission/réception de données de sécurité liées au véhicule vers/depuis un serveur en utilisant le second réseau (S250),
dans lequel le premier réseau est un réseau public, et le second réseau est un réseau privé.

2. Procédé de fonctionnement de la revendication 1, dans lequel l'identification de l'occurrence de l'événement prédéfini comprend en outre l'identification d'une réception d'une entrée d'utilisateur pour demander la recherche de réseau par le dispositif électronique de véhicule.

3. Procédé de fonctionnement de la revendication 1 ou de la revendication 2, dans lequel
des données liées au véhicule comprennent des données de journal liées à un historique de conduite du véhicule et des données liées à un fonctionnement du dispositif électronique de véhicule, et
le procédé de fonctionnement comprend en outre la collecte des données de journal tandis que le véhicule est en fonctionnement.

4. Procédé de fonctionnement de la revendication 3, dans lequel la transmission/réception des données liées au véhicule vers/depuis le serveur en utilisant le second réseau comprend :
l'envoi des données de journal au serveur ; et
la réception, depuis le serveur, de données pour mettre le véhicule à jour, les données pour mettre le véhicule à jour étant déterminées sur la base des données de journal.

5. Procédé de fonctionnement de la revendication 4, comprenant en outre :
la détermination d'une priorité d'un élément de données pour mettre le véhicule à jour ; et
la demande, depuis le serveur, des données pour mettre le véhicule à jour, sur la base de la priorité déterminée.

6. Procédé de fonctionnement de l'une quelconque des revendications précédentes, dans lequel le dispositif électronique de véhicule comprend un premier module d'identité d'abonné, SIM, et un second SIM ; et
le procédé de fonctionnement comprend en outre :
l'authentification d'un utilisateur du dispositif électronique de véhicule pour le premier réseau en utilisant le premier SIM ; et
l'authentification de l'utilisateur du dispositif électronique de véhicule pour le second réseau en utilisant le second SIM.

7. Dispositif électronique de véhicule 2000 pour un véhicule, le dispositif électronique de véhicule comprenant : une interface de communication 2220 ;
une mémoire 2300 stockant une ou plusieurs instructions ; et
au moins un processeur 2100 configuré pour exécuter les une ou plusieurs instructions stockées dans la mémoire ;
dans lequel l'au moins un processeur 2100 est en outre configuré pour :
identifier une occurrence d'un événement prédéfini, l'événement prédéfini comprenant le fait que le véhicule est à la fois situé dans une zone préenregistrée et dans un état de charge ;
identifier un état de réseau du dispositif électronique de véhicule, en réponse à l'identification de l'occurrence de l'événement prédéfini ;
rechercher un second réseau, en réponse au fait que l'état de réseau identifié indique une connexion du dispositif électronique de véhicule à un premier réseau ;
en réponse à la détection du second réseau, accéder au second réseau ; et
transmettre/recevoir des données de sécurité liées au véhicule vers/depuis le serveur en utilisant le second réseau ;
dans lequel le premier réseau est un réseau public, et le second réseau est un réseau privé.

8. Dispositif électronique de véhicule de la revendication 7, dans lequel l'au moins un processeur est en outre configuré pour identifier l'occurrence de l'événement prédéfini en identifiant la réception d'une entrée d'utilisateur pour une recherche de réseau par le dispositif électronique de véhicule.

9. Dispositif électronique de véhicule de la revendication 7 ou de la revendication 8, dans lequel
des données liées au véhicule comprennent des données de journal liées à un historique de conduite du véhicule et des données liées à un fonctionnement du dispositif électronique de véhicule, et
l'au moins un processeur est en outre configuré pour collecter les données de journal tandis que le véhicule est en fonctionnement.

10. Dispositif électronique de véhicule de la revendication 9, dans lequel l'au moins un processeur est en outre configuré pour :
envoyer les données de journal au serveur ; et
recevoir, depuis le serveur, des données pour mettre le véhicule à jour, les données pour mettre le véhicule à jour étant déterminées sur la base des données de journal.

11. Dispositif électronique de véhicule de la revendication 10, dans lequel les un ou plusieurs processeurs sont configurés pour exécuter les une ou plusieurs instructions stockées dans la mémoire pour :
déterminer la priorité d'un élément de données pour mettre le véhicule à jour ; et
demander, depuis le serveur, les données pour mettre le véhicule à jour, sur la base de la priorité déterminée.

12. Dispositif électronique de véhicule de l'une quelconque des revendications 7 à 11, dans lequel
le dispositif électronique de véhicule comprend un premier module d'identité d'abonné, SIM, et un second SIM ; et
l'au moins un processeur est en outre configuré pour :
authentifier un utilisateur du dispositif électronique de véhicule pour le premier réseau en utilisant le premier SIM ; et
authentifier l'utilisateur du dispositif électronique de véhicule pour le second réseau en utilisant le second SIM.

13. Support d'enregistrement lisible par ordinateur sur lequel est stocké un programme informatique, qui lorsqu'il est exécuté par un ordinateur, réalise le procédé de l'une quelconque des revendications 1 à 6.
